# EUROPEAN PATENT SPECIFICATION

(11) **EP 3 856 451 B1**
(45) Date of publication and mention of the grant of the patent: **03.01.2024**
(21) Application number: 19787478.7
(22) Date of filing: 23.09.2019
(51) Int. Cl.: B23Q 1/00, B23Q 3/12, B23Q 5/04, B24B 55/00, B24D 7/10, B23Q 39/02

(54) **MULTI-SPINDLE OPERATING HEAD**
MEHRSPINDELKOPF
TETE MULTIBROCHE

(30) Priority: 24.09.2018 IT 201800008845
(43) Date of publication of application: 04.08.2021
(73) Proprietor: Tupini, Giovanni, 36015 Schio (VI) (IT); Lo Piccolo, Rosario, 36015 Schio (VI) (IT)
(72) Inventor: Tupini, Giovanni, 36015 Schio (VI) (IT); Lo Piccolo, Rosario, 36015 Schio (VI) (IT)
(74) Representative: Garavelli, Paolo
(86) International application number: PCT/IT2019/050205
(87) International publication number: WO 2020/065687

(56) References cited:
- EP-A1- 2 255 924
- EP-A2- 0 471 641
- FR-A1- 2 825 940

## Description

### Technical Field

The present invention relates to a multi-spindle operating head.

In general, the present invention refers to machines and devices designed for smoothing and polishing surfaces of inorganic material, for example, stone, ceramic, porcelain, glass.

In particular, the present invention relates to synchronous motors with permanent magnets and to envelopes characterized by shape or construction with ribs or fins for improving the heat transfer.

Electric machines are known in the form of direct current machines or alternating current machines, asynchronous or synchronous machines. For the cooling of DC motors, an air cooling system is often provided in which a fan impeller is driven by the rotor shaft generating an air current through the machine housing. Instead, three-phase machines generally have a closed housing and a small air gap between the stator and the rotor. Therefore, it is almost impossible to cool these machines with air. According to the prior art on alternating current machines, the housing is closed for reasons of water tightness and is equipped with external fins to discharge heat. As the power of electric machines increases, these cooling systems are no longer able to discharge a sufficient amount of heat. This problem is particularly present with the drive axles in which one or more electric machines are installed. As a result, electric machines reach high temperatures at steady state. Compared to air cooling systems, liquid cooling systems are significantly more efficient and allow a large amount of heat to be discharged. Therefore, to obtain the same power supplied, it is possible to reduce the size of the electric machine or, for an electric machine of the same size, increase the power. On three-phase machines, liquid cooling systems are known in which a system of pipes for cooling the stator is located on the outer housing. However, an external cooling system to cool the entire three-phase machine is difficult and expensive to build, cumbersome and difficult to maintain. Electric machines are also known with an internal liquid cooling system in which the rotor operates in oil, although this causes an increase in spray losses. High cooling capacity is also required in such internal and external liquid cooling systems because the entire electric machine must be cooled, which increases the complexity and construction costs.

### Background Art

The state of the art is represented by US patent 5 322 494 A concerning a motor fixed to a support to form a driven element. The motor enclosed by a housing includes an armature or rotor supported by a driving shaft having ball bearings front and back respectively. Surrounding the armature is a stator cooled with water. A jacket surrounding the stator is provided with passages extending outwards through which water circulates to cool the stator. Similarly, the drive shaft is provided with a sleeve within which the outer surface of the shaft is formed with passages for circulating the cooling water. At the left end of the shaft, the engine is provided with a rotating gasket to deliver cooling water to a passage extending longitudinally. A second passage extending longitudinally is connected to bring the return water to a second rotary seal at the end of the shaft. The water cooling allows the motor to operate at high speeds up to 40,000 revolutions/min.

Moreover, the state of the art is represented by US patent 7 714 478 B2 concerning an electric rotary machine comprising a rotor and a stator in a region of space internal of a case made of an aluminium alloy. The cooling fins are fixed on the outer casing. The stator fixed to the inside of the case is laminated with a plurality of thin steel plates alternated with layers not ferrous and not electrically conductive. The stator reduces to a minimum a loss due to a stray current of magnetic flux inside the stator. In addition, the stator is divided into thirty-six grooves in a peripheral direction of the stator, the stator having cores equal in number to the grooves. A winding of electrically conductive coil is wound on each of the cores of the stator. The case of cooling made of aluminum alloy has a high thermal conductivity, for which the heat generated in the windings of the coil and the cores of the stator can be quickly discharged through the outside of the case allowing to increase the cooling of the rotary electrical machine while ensuring a mechanical rigidity of electric rotary machine.

The state of the art is represented also by US patent application 2017/0288493 A1 regarding a stator for an electrical rotating machine that allows the reduction of the unbalance of compression stresses on a stator core between a thin portion due to the formation of a cooling passage of a frame and a thick portion where there is no passage of cooling. The stator for electric rotary machine includes a stator core of cylindrical shape fixed to an inner circumferential side of a frame with a predetermined interference fit and an outer circumferential side on which is formed a passage for the cooling fluid to cool the stator core, in which the interference in a thin portion due to the formation of the passage of cooling of the frame is greater than the interference in a thick portion in which there is no passage of cooling thus allowing the reduction of imbalance of compressive stress on the core of a stator between a thin portion and a thick portion of a frame.

Furthermore, it is known EP patent 1 536 916 B1 concerning a spindle comprising a tubular seat in which the body of the mandrel is movable, the spindle body including a shaft bearing a tool head rotary abrasive and a fluid dynamic cylinder for setting the position of the spindle on a metal structure. The body of the mandrel is coaxial with a cylindrical actuator having the piston rod coinciding with the body of the spindle allowing a more compact design, a construction more reliable, maintenance more convenient and eliminating any projection of the spindle body.

In particular, the patent FR 2 825 940 A1 is mentioned, which forms the basis for the preamble of the appended claim.

### Summary of Invention

### Technical Problem

The invention of US 5 322 494 A solves the problem of the removal of the heat of a motor enclosed by a jacket surrounding the stator provided with passages allowing the motor to operate at high speeds. But the use of a jacket and of channels within the stator decreases the mechanical rigidity which is instead necessary on tool holding spindles and in polishing heads provided with abrasive blocks oscillating or rotating to work on flat surfaces of stone, ceramic, porcelain, glass.

### Solution to Problem

A hint to solve the technical problem is given by US 2017/0288493 A1 regarding a stator of a dynamoelectric machine keyed on a frame formed by a first thin portion and a second tick portion. The thin portion of the frame allows the passage of cooling liquid, while the tick portion of the frame ensures the structural stability.

A further hint to improve the electromagnetic efficiency and at the same time to reduce the overall dimensions is given by US 7 714 478 B2 regarding a casing of not uniform thickness to improve heat dissipation and to optimize design and the magnetic path of a rotary electric machine.

A further hint to improve the response of the axial movement of an operating head is given by EP 1 536 916 B1 concerning a spindle axially positionable through a fluid dynamic cylinder and a compact and miniaturized operating head thanks to a permanent magnet motor.

The object of the present invention is to solve the aforementioned problems of the prior art by providing an electro-spindle connected to an operating head with a high structural rigidity but at the same time capable of effectively dissipating the heat. A further object is that any type of accumulation and parking of the dust and scale on the electro-spindle frame is avoided. For this reason, the efficiency of heat dissipation remains constant, the dust does not change the physical parameters of the algorithm of the thermal calculation. A further object is to provide an electro-spindle connected to an operating head which is compact with an electromagnetic efficiency increased by high magnetic density materials for the same volume. A further object is to provide an electro-spindle connected to an operating head without the aid of a forced flow of cooling liquid. A further object is to provide an electro-spindle of simple construction. A further object is to provide an electro-spindle connected to a reduced-mass operating head to increase the readiness to compensate for the weight of an operating head by means of a feedback-controlled pneumatic actuator. A further object is to provide a scaled, multi-spindle operating head, that is, of reduced dimensions and at the same time more mechanically powerful.

### Advantageous Effects of Invention

An advantage of the invention is that of being able to have an electro-spindle of reduced volume and at the same time to have increased the power necessary to the operating head to which it is connected. A further advantage is that of being able to realize an electro-spindle connected to an operating head respecting a continuity of the shear stress along the cantilever arm of the head / electro spindle structure. A further advantage is that of being able to produce a multi-spindle operating head of reduced overall dimensions and high mechanical performance.

The aforementioned and other objects and advantages of the invention, as they will emerge from the following description, are achieved with a multi-spindle operating head, as described in the main claim. It will be immediately obvious that innumerable variations and modifications (for example relating to shape, dimensions, arrangements and parts with equivalent functionality) can be made to the description without departing from the scope of protection of the invention as defined in the appended claim.

### Brief Description of Drawings

The present invention will be better described by some preferred embodiments thereof, given as a non-limiting example, with reference to the enclosed drawings, in which:
FIG. 1 shows a longitudinal sectional view of an example of an electro spindle connected to an operating head;
FIG. 2 shows a longitudinal sectional view of the electro spindle connected to an operating head according to the present invention;
FIG. 3 shows an axonometric view of the previous figure;
FIG. 4 shows a perspective view of a portion of an operating head provided with a plurality of electro spindles of a multi-spindle operating head according to the present invention; and
FIG. 5 shows the previous figure without the upper part of the multi-spindle operating head.

### Description of Embodiments

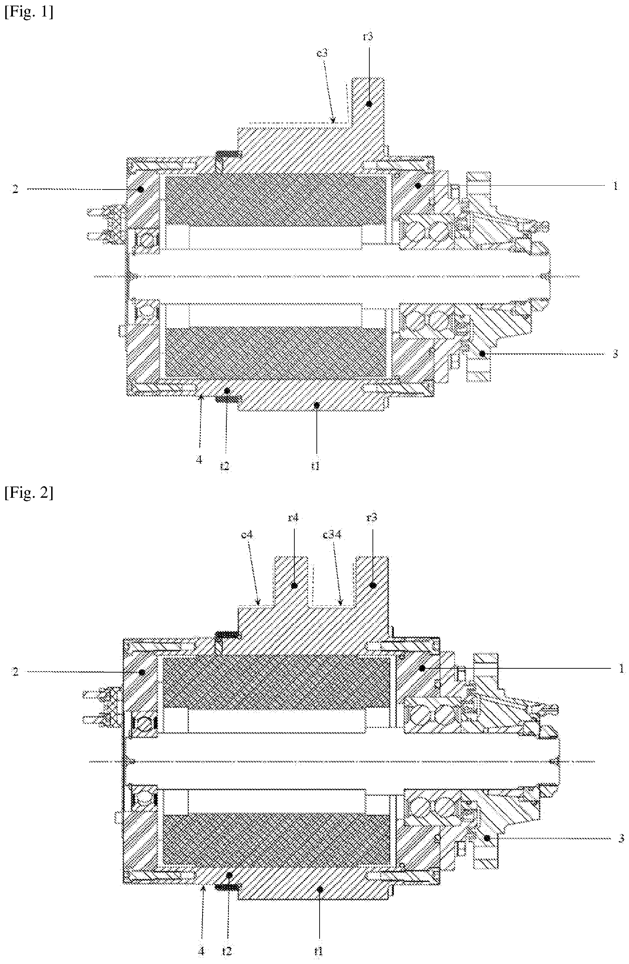

With reference to FIGS. 1, 2, it is possible to note that an electro spindle connected to an operating head comprises a cylindrical casing longitudinally delimited by a front flange 1 and a rear flange 2, a shaft rotatably supported by both the front flange 1 and the rear flange 2 by means of bearings, an interface flange 3 connected to the shaft with fasteners to support a tool holder, a rotor attached to the shaft, a stator attached to an inner wall surface of the cylindrical casing so as to surround the rotor, an electrical connector mounted on the rear flange 2 and electrically connected to the stator.

Advantageously, the cylindrical casing consists of a first section t1 of thick radial thickness to support the interface flange 3 through the front flange 1 and a second section t2 of small radial thickness provided with a mechanical interface 4 to connect the electro spindle to the operating head.

With reference to FIG. 1, which does not fall under the scope of the claim, such first section t1 is surmounted by at least one ring r3 of thick thickness. Such at least one ring r3 is positioned so as to form at least one U-shaped transverse annular channel c3, the surface of the ring r3 and that of the channel c3 wetted by a cooling liquid.

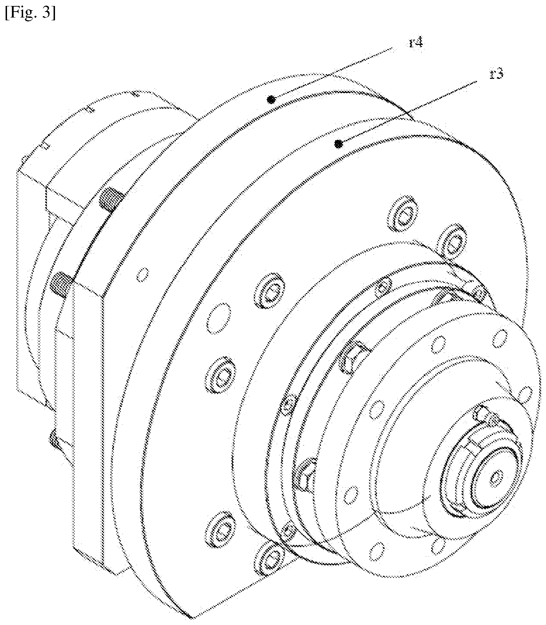

With reference to FIGS. 2, 3, according to the invention, the first section t1 is surmounted by two rings r3, r4 of deep thickness. The two rings r3, r4 are positioned so as to form a first U-shaped transverse annular channel c34 and a second U-shaped transverse annular channel c4, the surface of the rings r3, r4 and that of the channels c34, c4 being wetted by a cooling liquid.

In this way, the surface of the first section t1 wetted by a cooling liquid is approximately increased by at least twice through the rings r3, r4 and the channels c34, c4.

Preferably, the thickness of each ring r3, r4 is approximately equal to the thickness of the front flange 1 or to that of the rear flange 2.

Preferably, the rotor and the stator belong to a synchronous motor with permanent magnets, the permanent magnets mounted on the rotor surface, the stator installed around the rotor with a space between them, the coils wound around the stator, so that when the electric current is applied to the coil, the rotor is rotated by a force applied in a certain direction. Alternatively, the permanent magnets are inserted inside the rotor.

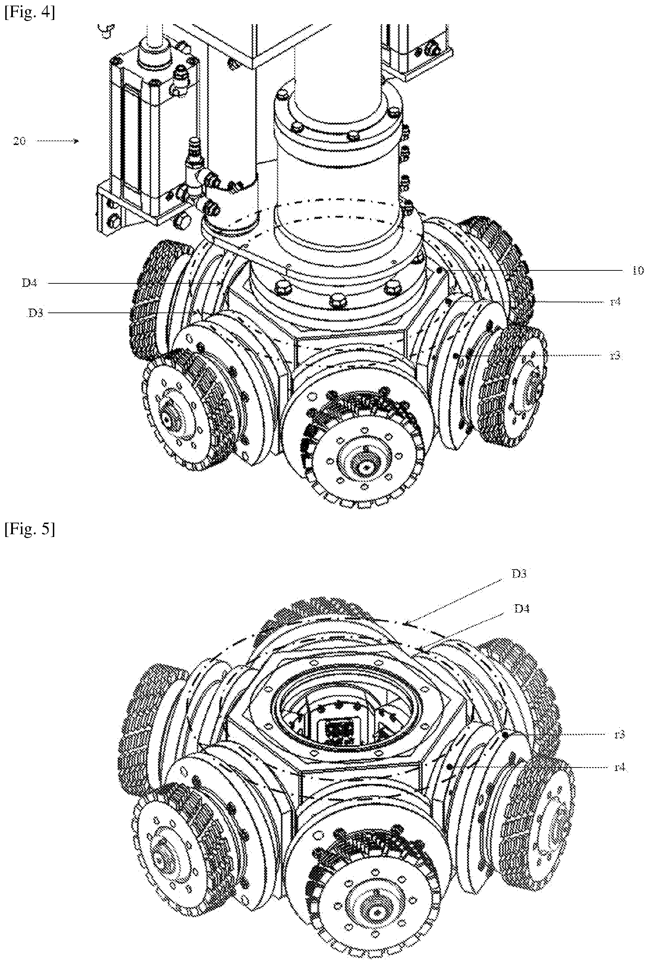

With reference to FIGS. 4, 5, a multi-spindle operating head comprises a central structure 10 rotating orthogonally to a work plane. The central structure 10 is able to support a plurality of electro spindles distributed on a circumference with the same angular distance, the rotation axis of each electro spindle disposed radially with respect to the axis of rotation of the central structure 10.

In particular, the central structure 10 comprises a seat adapted to receive each electro spindle by means of the mechanical interface 4 in order to be able to arrange at least an array of rings r3, r4 aligned on at least one circumference D3, D4 coaxial with the central structure 10 in order to maintain an ordered now of the cooling liquid over each electro spindle avoiding the noise disturbance of the cooling liquid flow over the contiguous electro spindles..

### Examples

A spindle connected to an operating head according to the present invention is adapted to replace an operating head according to the state of the art. For example, a known multi-spindle calibrating head, comprising twenty electro spindles uniformly distributed on a circumference with a diameter equal to 1600 mm, in radial direction, each electro spindle of 1,7 kW, could be replaced with a multi-spindle calibrating head, of the type according to the present invention, comprising six electro-spindles uniformly distributed on a circumference of diameter equal to 670 mm, in radial direction, each electro-spindle of about 6.0 kW, the overall dimensions of the 6 kW electro spindle being the same as the electro-spindle of 1,7 Kw, thanks to a downsizing, through the adoption of permanent magnet technology, with the same operating force and speed of the rotating shaft.

A calibrating head with six electro spindles arranged on a circumference with a diameter of 670 mm is suitable for working a slab of stone material moving on the curved surface of the slab. Therefore the electro spindle resizing allows adjusting the orientation of the calibrating head to the curvature of the slab to be processed. This aspect becomes important for slabs coming from traditional sawing, with wire and blades, compared to those coming from diamond sawing, more precise and flat but limited to small slabs, and in particular for slabs of agglomerated material.

An electro-spindle connected to an operating head, object of the present invention, is suitable for compensating for the weight of a multi-spindle operating head by means of a feedback device with a pneumatic cylinder controlled by a pressure regulator.

## Claims

1. Multi-spindle operating head comprising a central structure (10) adapted to rotate orthogonally to a work plane, said central structure (10) supporting a plurality of electro spindles distributed on a circumference with the same angular distance, the rotation axis of each electro spindle disposed radially with respect to the axis of rotation of the central structure (10), the central structure (10) comprising a seat adapted to receive each electro spindle by means of a mechanical interface (4) in order to arrange at least an array of rings (r3), (r4) aligned on at least one circumference (D3), (D4) coaxial with the central structure (10), **characterised in that**:
- each of said plurality of electro spindles connected to the multi-spindle operating head comprises a cylindrical casing longitudinally delimited by a front flange (1) and a rear flange (2), a shaft rotatably supported by both the front flange (1) and the rear flange (2) by means of bearings, an interface flange (3), a rotor attached to the shaft, a stator attached to an inner wall surface of the cylindrical casing so as to surround the rotor, an electrical connector mounted on the rear flange (2) and electrically connected to the stator, the cylindrical casing consisting of a first section (t1) to support the interface flange (3) through the front flange (1) and a second section (t2) provided with said mechanical interface (4) to connect the electro spindle to the multi-spindle operating head, said first section (t1) surmounted by at least one of the two rings (r3), (r4), said two rings (r3), (r4) positioned so as to form a first U-shaped transverse annular channel (c34) and a second U-shaped transverse annular channel (c4);
- the surface of the first section (t1) is approximately increased by at least twice through the rings (r3), (r4) and the channels (c34), (c4);
- the thickness of each ring (r3), (r4) is approximately equal to the thickness of the front flange (1) or to that of the rear flange (2).

## Patentansprüche

1. Mehrspindel-Arbeitskopf mit einer zentralen Struktur (10), die sich orthogonal zu einer Arbeitsebene drehen kann, wobei die zentrale Struktur (10) eine Vielzahl von Elektrospindeln trägt, die auf einem Umfang mit gleichem Winkelabstand verteilt sind und die Drehachse jeder Elektrospindel ermöglichen radial in Bezug auf die Drehachse der zentralen Struktur (10) angeordnet ist, wobei die zentrale Struktur (10) einen Sitz umfasst, der in der Lage ist, jede Elektrospindel über eine mechanische Schnittstelle (4) aufzunehmen, um sie anordnen zu können mindestens eine Anordnung von Ringen (r3), (r4), die auf mindestens einem Umfang (D3), (D4) koaxial zur zentralen Struktur (10) ausgerichtet sind,
**dadurch gekennzeichnet, dass**:
- jede der mehreren Elektrospindeln, die mit dem Mehrspindel-Arbeitskopf verbunden sind, umfasst ein zylindrisches Gehäuse, das in Längsrichtung durch einen vorderen Flansch (1) und einen hinteren Flansch (2) begrenzt ist, wobei eine Welle beide durch den vorderen Flansch drehbar gelagert ist (1) entweder durch den hinteren Flansch (2) mittels Lager, einen Schnittstellenflansch (3), einen an der Welle befestigten Rotor, einen an einer Innenwandfläche des zylindrischen Gehäuses befestigten Stator, der den Rotor umgibt, an elektrischer Steckverbinder, der am hinteren Flansch (2) montiert und elektrisch mit dem Stator verbunden ist, wobei das zylindrische Gehäuse aus einem ersten Abschnitt (t1) zur Unterstützung des Schnittstellenflansches (3) durch den vorderen Flansch (1) und einem zweiten Abschnitt (t2) besteht, ausgestattet mit dem Schnittstellenmechanismus (4), um die Elektrospindel mit dem Mehrspindel-Betätigungskopf zu verbinden, wobei der erste Abschnitt (t1) von mindestens einem der beiden Ringe (r3), (r4) überragt wird, wobei die beiden Ringe (r3), (r4), so positioniert, dass ein erster quer verlaufender U-förmiger Ringkanal (c34) und ein zweiter quer verlaufender U-förmiger Ringkanal (c4) gebildet werden;
- die Oberfläche des ersten Abschnitts (t1) hat sich durch die Ringe (r3), (r4) und die Kanäle (c34), (c4) etwa um mindestens das Doppelte vergrößert;
- die Dicke jedes Rings (r3), (r4) entspricht ungefähr der Dicke des vorderen Flansches (1) oder der des hinteren Flansches (2).

## Revendications

1. Tête de manoeuvre multibroches comprenant une structure centrale (10) susceptible de tourner orthogonalement à un plan de travail, ladite structure centrale (10) supportant une pluralité d'électrobroches réparties sur une circonférence à égale distance angulaire, l'axe de rotation de chaque électrobroche disposée radialement par rapport à l'axe de rotation de la structure centrale (10), la structure centrale (10) comprenant un siège apte à recevoir chaque électro-broche via une interface mécanique (4) afin de pouvoir disposer au niveau au moins un réseau d'anneaux (r3), (r4) alignés sur au moins une circonférence (D3), (D4) coaxial à la structure centrale (10),
**caractérisé par le fait que**:
- chacune de ladite pluralité d'électrobroches reliée à la tête de manoeuvre multibroches comprend un carter cylindrique délimité longitudinalement par un flasque avant (1) et un flasque arrière (2), un arbre supporté en rotation tous les deux par le flasque avant (1) soit par le flasque arrière (2) au moyen de paliers, un flasque d'interface (3), un rotor fixé sur l'arbre, un stator fixé sur une paroi interne de l'enveloppe cylindrique de manière à entourer le rotor, un connecteur électrique monté sur le flasque arrière (2) et relié électriquement au stator, l'enveloppe cylindrique étant constituée d'un premier tronçon (t1) de support du flasque d'interface (3) à travers le flasque avant (1) et d'un second tronçon (t2) muni dudit mécanisme d'interface (4) pour relier l'électrobroche à la tête de manoeuvre multibroche, ledit premier tronçon (t1) surmonté d'au moins l'un des deux anneaux (r3), (r4), lesdits deux anneaux (r3), (r4) positionné de manière à former un premier canal annulaire transversal en forme de U (c34) et un deuxième canal annulaire transversal en forme de U (c4);
- la surface du premier tronçon (t1) a augmenté environ d'au moins deux fois à travers les anneaux (r3), (r4) et les canaux (c34), (c4);
- l'épaisseur de chaque anneau (r3), (r4) est sensiblement égale à l'épaisseur du rebord avant (1) ou à celle du rebord arrière (2).
